# EUROPEAN PATENT APPLICATION

(11) **EP 4 836 037 A1**
(43) Date of publication of application: **04.11.2026**
(21) Application number: 24912738.2
(22) Date of filing: 23.12.2024
(51) Int. Cl.: H01M 8/1004, B01D 61/00, C25B 9/23, C25B 11/052, C25B 11/069, C25B 13/04, C25B 13/08, H01M 4/86, H01M 8/10, H01M 8/1039

(54) **METHOD FOR RECOVERING FLUORINE-CONTAINING POLYMER**

(30) Priority: 27.12.2023 JP 2023221438
(71) Applicant: AGC Inc., Chiyoda-ku Tokyo 100-8405 (JP)
(72) Inventor: HOSOYA Ayaka, Tokyo 100-8405 (JP)
(74) Representative: Müller-Boré & Partner Patentanwälte PartG mbB
(86) International application number: PCT/JP2024/045492
(87) International publication number: WO 2025/142851

(57) **Abstract**

To provide a method for a recovering fluorinated polymer, by which the recovered fluorinated polymer is less likely to be swollen. The method for recovering a fluorinated polymer of the present invention is a method for recovering a fluorinated polymer from a membrane electrode assembly comprising an anode and a cathode, each having a catalyst layer containing a catalyst and a fluorinated polymer having a sulfonic acid group, and an electrolyte membrane containing a fluorinated polymer having a sulfonic acid group, disposed between the anode and the cathode, the method comprising: bringing the membrane electrode assembly into contact with a first solution selected from solution A consisting solely of water and solution B containing water and an alcohol; mixing the membrane electrode assembly with a second solution containing water and an alcohol, to obtain a mixed solution containing the fluorinated polymer, the second solution and insoluble substances; and removing the insoluble substances contained in the mixed solution and recovering the fluorinated polymer contained in the mixed solution from which the insoluble substances have been removed.

## Description

### TECHNICAL FIELD

The present invention relates to a method for recovering a fluorinated polymer.

### BACKGROUND ART

A membrane electrode assembly used for water electrolyzers and fuel cells has an anode having a catalyst layer, a cathode having a catalyst layer, and an electrolyte membrane disposed between the anode and the cathode.

In recent years, in view of reduction of environmental burden, reuse of materials constituting the membrane electrode assembly has been studied. For example, Patent Document 1 discloses a method for recovering a fluorinated polymer, using a membrane electrode assembly taken out from a fuel cell, via e.g. a step of eluting the fluorinated polymer in the electrolyte membrane.

### PRIOR ART DOCUMENTS

### PATENT DOCUMENTS

Patent Document 1: JP-A-2004-171921

### DISCLOSURE OF INVENTION

### TECHNICAL PROBLEM

In a case where a fluorinated polymer having a sulfonic acid group is recovered from a membrane electrode assembly and the recovered fluorinated polymer is reused as a polymer for producing an electrolyte membrane or a catalyst layer, the recovered fluorinated polymer is required to have a property such that it is hardly swollen with moisture or the like.

The present inventor has tried recovery of a fluorinated polymer by dissolving a fluorinated polymer having a sulfonic acid group in an electrolyte membrane in a solution containing an alcohol with reference to the method of recovering a fluorinated polymer as described in Patent Document 1, and as a result found that swelling of the recovered fluorinated polymer was not sufficiently suppressed and that there was room for improvement.

Under these circumstances, the present invention has been made to solve the above problems, and an object of the present invention is to provide a method for recovering a fluorinated polymer, by which the recovered fluorinated polymer is less likely to be swollen.

### SOLUTION TO PROBLEM

The present inventor has conducted extensive studies on the above object and as a result found that desired effects can be achieved by bringing a membrane electrode assembly, an electrolyte membrane or an electrode (at least one of an anode and a cathode) into contact with a first solution selected from solution A consisting solely of water and solution B containing water and an alcohol in a low alcohol content, and then mixing the membrane electrode assembly, electrolyte membrane or electrode that has been brought into contact with the first solution, with a second solution containing water and an alcohol in a high alcohol content. The present invention has been accomplished on the basis of this discovery.

That is, the present inventor has found that the above object can be achieved by the following configurations.
[1] A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, the method comprising:
   bringing the membrane electrode assembly into contact with a first solution selected from solution A consisting solely of water and solution B containing water and an alcohol in an alcohol content of 10 parts by mass or less relative to 100 parts by mass of the water;
   mixing the membrane electrode assembly that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances including the catalyst; and
   removing the insoluble substances contained in the mixed solution and recovering the fluorinated polymer contained in the mixed solution from which the insoluble substances have been removed.
[2] The method for recovering the fluorinated polymer according to [1], wherein the contact between the first solution and the membrane electrode assembly is contact between the solution A and the membrane electrode assembly, and the solution A is heated.
[3] The method for recovering the fluorinated polymer according to [1] or [2], wherein when the membrane electrode assembly is brought into contact with the first solution, the first solution is heated, and
   the temperature of the first solution is lower than the temperature of the second solution.
[4] The method for recovering the fluorinated polymer according to any one of [1] to [3], wherein the recovered fluorinated polymer has a weight average molecular weight of 10,000 to 1,000,000.
[5] The method for recovering the fluorinated polymer according to [3], wherein the difference between the temperature of the first solution and the temperature of the second solution is 5°C or more and 115°C or less.
[6] A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, wherein the fluorinated polymer is the fluorinated polymer that is contained in the electrolyte membrane, the method comprising:
   separating the electrolyte membrane from the membrane electrode assembly,
   bringing the separated electrolyte membrane into contact with a first solution selected from solution A consisting solely of water and solution B containing water and an alcohol in an alcohol content of 10 parts by mass or less relative to 100 parts by mass of the water;
   mixing the electrolyte membrane that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances; and
   removing the insoluble substances contained in the mixed solution and recovering the fluorinated polymer contained in the mixed solution from which the insoluble substances have been removed.
[7] The method for recovering the fluorinated polymer according to [6], wherein the contact between the first solution and the electrolyte membrane is contact between the solution A and the electrolyte membrane, and the solution A is heated.
[8] The method for recovering the fluorinated polymer according to [6] or [7], wherein when the electrolyte membrane is brought into contact with the first solution, the first solution is heated, and
   the temperature of the first solution is lower than the temperature of the second solution.
[9] The method for recovering the fluorinated polymer according to any one of [6] to [8], wherein the recovered fluorinated polymer has a weight average molecular weight of 10,000 to 1,000,000.
[10] The method for recovering the fluorinated polymer according to [8], wherein the difference between the temperature of the first solution and the temperature of the second solution is 5°C or more and 115°C or less.
[11] A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, wherein the fluorinated polymer is at least one of the fluorinated polymer contained in the catalyst layer of the anode and the fluorinated polymer contained in the catalyst layer of the cathode, the method comprising:
   separating at least one of the anode and the cathode from the membrane electrode assembly,
   bringing the at least one of the separated anode and cathode into contact with a first solution selected from solution A consisting solely of water and solution B containing water and an alcohol in an alcohol content of 10 parts by mass or less relative to 100 parts by mass of the water;
   mixing the at least one of the anode and cathode that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances; and
   removing the insoluble substances contained in the mixed solution and recovering the fluorinated polymer contained in the mixed solution from which the insoluble substances have been removed.
[12] The method for recovering the fluorinated polymer according to [11], wherein the contact between the first solution and the at least one of the anode and cathode is contact between the solution A and the at least one of the anode and cathode, and the solution A is heated.
[13] The method for recovering the fluorinated polymer according to [11] or [12], wherein when the at least one of the anode and cathode is brought into contact with the first solution, the first solution is heated, and
   the temperature of the first solution is lower than the temperature of the second solution.
[14] The method for recovering the fluorinated polymer according to any one of [11] to [13], wherein the recovered fluorinated polymer has a weight average molecular weight of 10,000 to 1,000,000.
[15] The method for recovering the fluorinated polymer according to [13], wherein the difference between the temperature of the first solution and the temperature of the second solution is 5°C or more and 115°C or less.

### ADVANTAGEOUS EFFECTS OF INVENTION

According to the present invention, it is possible to provide a method for recovering a fluorinated polymer by which the recovered fluorinated polymer is less likely to be swollen.

### BRIEF DESCRIPTION OF DRAWINGS

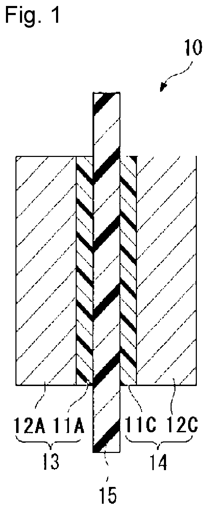

Fig. 1 is a cross sectional view illustrating an example of a membrane electrode assembly.

### DESCRIPTION OF EMBODIMENTS

The following definitions of terms apply throughout the specification and claims unless otherwise specified.

A "unit" in a polymer refers to an atomic group derived from a single monomer molecule, which is formed by polymerization reaction of the monomer. A unit may be an atomic group formed directly by polymerization or may be an atomic group formed by polymerization followed by modification to a partially different structure. In the following, in some cases, a unit derived from a certain monomer will be represented by the monomer name, followed by "unit".
" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

Now, materials used in the method for recovering a fluorinated polymer of the present invention will be described, then the method for recovering the fluorinated polymer of the present invention will be described for every embodiment.

### [Membrane electrode assembly]

The membrane electrode assembly used in the method for recovering a fluorinated polymer of the present invention comprises an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode.

In the following description, unless otherwise specified, the "fluorinated polymer having a sulfonic acid group" will be referred to as a "specific fluorinated polymer".

An example of the membrane electrode assembly will be described with reference to a drawing.

Fig. 1 is a cross sectional view illustrating an example of a membrane electrode assembly used in the respective embodiments to be described below. A membrane electrode assembly 10 includes an anode 13 having a catalyst layer 11A and a gas diffusion layer 12A, a cathode 14 having a catalyst layer 11C and a gas diffusion layer 12C, and a polymer electrolyte membrane 15 disposed between the anode 13 and the cathode 14 in contact with the catalyst layer 11A and the catalyst layer 11C.

The membrane electrode assembly 10 is preferably a membrane electrode assembly recovered from a fuel cell (polymer electrolyte fuel cell) or a water hydrolyzer. The method of recovering the membrane electrode assembly 10 from such an apparatus is not particularly limited and a known method may be employed.

### <Electrolyte membrane>

The polymer electrolyte membrane 15 contains the specific fluorinated polymer, and a known polymer electrolyte membrane may be used.

The specific fluorinated polymer contained in the polymer electrolyte membrane 15 is not particularly limited and preferably contains a unit based on a fluorinated olefin and a unit having a sulfonic acid group and a fluorine atom.

The fluorinated olefin may, for example be a C₂₋₃ fluoroolefin having one or more fluorine atom in its molecule. Specific examples of the fluoroolefin include tetrafluoroethylene (hereinafter also referred to as "TFE"), chlorotrifluoroethylene, vinylidene fluoride, vinyl fluoride and hexafluoropropylene, and among them, TFE is preferred.

The unit having a sulfonic acid group and a fluorine atom is preferably a unit represented by formula (1).

Formula (1) -[CF₂-CF(-L-(SO₃H)ₙ)]-

L is a (n+1)-valent perfluorohydrocarbon group which may contain an etheric oxygen atom.

The etheric oxygen atom may be positioned at the terminal end or may be positioned between carbon atoms of the perfluorohydrocarbon group.

The number of carbon atoms in the (n+1)-valent perfluorohydrocarbon group is preferably 1 or more, particularly preferably 2 or more, and is preferably 20 or less, particularly preferably 10 or less.

L is preferably a (n+1)-valent perfluoroaliphatic hydrocarbon group which may contain an etheric oxygen atom, particularly preferably a bivalent perfluoroalkylene group which may contain an etheric oxygen atom, corresponding to an embodiment of n=1, or a trivalent perfluoroaliphatic hydrocarbon group which may contain an etheric oxygen atom, corresponding to an embodiment of n=2.

The bivalent perfluoroalkylene group may be linear or branched.
n is 1 or 2.

The unit represented by formula (1) is preferably a unit represented by formula (1-1), a unit represented by formula (1-2), a unit represented by formula (1-3) or a unit represented by formula (1-4).

Formula (1-1) -[CF₂-CF(-O-R^{f1}-SO₃H)]-

Formula (1-2) -[CF₂-CF(-R^{f1}-SO₃H)]-

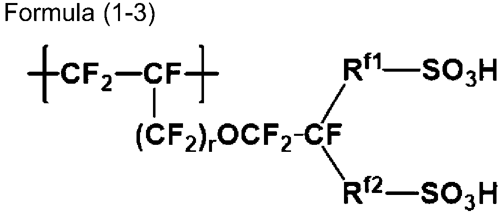

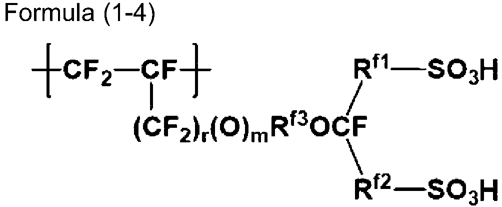

R^{f1} is a perfluoroalkylene group which may contain an etheric oxygen atom. The number of carbon atoms in the perfluoroalkylene group is preferably 1 or more, particularly preferably 2 or more, and is preferably 20 or less, particularly preferably 10 or less.

R^{f2} is a single bond or a perfluoroalkylene group which may contain an etheric oxygen atom. The number of carbon atoms in the perfluoroalkylene group is preferably 1 or more, particularly preferably 2 or more, and is preferably 20 or less, particularly preferably 10 or less.

R^{f3} is a single bond or a perfluoroalkylene group which may contain an etheric oxygen atom. The number of carbon atoms in the perfluoroalkylene group is preferably 1 or more, particularly preferably 2 or more, and is preferably 20 or less, particularly preferably 10 or less.

The etheric oxygen atom may be positioned at the terminal end or may be positioned between carbon atoms of the perfluoroalkylene group.
r is 0 or 1.
m is 0 or 1.

The polymer electrolyte membrane 15 may be reinforced by a reinforcing material. The reinforcing material may, for example, be a porous body, a fiber, a woven fabric or a nonwoven fabric. The material of the reinforcing material may, for example be a polytetrafluoroethylene, a tetrafluoroethylene/hexafluoropropylene copolymer, a tetrafluoroethylene/perfluoro(alkyl vinyl ether) copolymer, a polyethylene, a polypropylene, a polyphenylene sulfide, a polyether sulfone or a polyether ether ketone.

The polymer electrolyte membrane 15 may contain at least one type of an atom selected from the group consisting of cerium and manganese, in order to further improve durability. Cerium and manganese decompose hydrogen peroxide, a material that causes deterioration of the polymer electrolyte membrane 15. Cerium and manganese are present in the polymer electrolyte membrane 15 preferably in the form of ions, and may be present in the polymer electrolyte membrane 15 in any state so long as they are present in the form of ions.

The polymer electrolyte membrane 15 may contain silica or a heteropoly acid (zirconium phosphate, phosphomolybdic acid or phosphotungstic acid) as a water retention agent to prevent drying.

The polymer electrolyte membrane 15 may contain a platinum atom, in order to consume hydrogen permeating through the membrane in the membrane.

### <Cathode>

The catalyst layer 11C of the cathode 14 contains the catalyst and the specific fluorinated polymer, and a catalyst layer for a known cathode may be used.

The specific fluorinated polymer contained in the catalyst layer 11C is not particularly limited and preferably contains a unit having a sulfonic acid group and a fluorine atom and at least one of a unit based on a fluorinated olefin and a unit containing a cyclic ether structure.

Specific examples of the unit having a sulfonic acid group and a fluorine atom, and the unit based on a fluorinated olefin, are the same as the units which may be contained in the specific fluorinated polymer in the polymer electrolyte membrane 15.

Specific examples of the unit containing a cyclic ether structure may be units containing a cyclic ether structure as described in WO2020/145287.

The catalyst contained in the catalyst layer 11C is not particularly limited and may, for example, be a supported catalyst having a catalyst containing platinum, a platinum alloy or core/shell structured platinum, supported on a carbon carrier or a metal oxide carrier, an iridium oxide catalyst, or a catalyst containing an iridium oxide-containing alloy or core/shell structured iridium oxide. The carbon carrier may be a carbon black powder. The metal oxide carrier may be an oxide of a metal element or a composite oxide of aluminum, tin, zinc, nickel, cobalt, iron, titanium, cerium, zirconium, palladium, lanthanum, niobium, tantalum, antimony or the like. Further, a non-metallic catalyst having an electrode catalytic activity, such as a carbon alloy catalyst may be used.

The gas diffusion layer 12C has a function to diffuse gas or water uniformly through the catalyst layer 11C, a function to discharge gas generated from the catalyst layer 11C, and a function as a current collector.

The gas diffusion layer 12C may, for example, be a carbon paper, a carbon cloth, a carbon felt or a titanium porous body. In a case where the gas diffusion layer 12C is composed of carbon, it is preferably made water-repellent with e.g. a polytetrafluoroethylene. In a case where it is constituted by a titanium porous body, it is preferably surface-coated with platinum.

The membrane electrode assembly 10 in Fig. 1 includes the gas diffusion layer 12C, but the gas diffusion layer is an optional member and may not be included in the membrane electrode assembly.

### <Anode>

The catalyst layer 11A of the anode 13 includes a catalyst and a specific fluorinated polymer, and a catalyst layer for a known anode may be used.

The specific fluorinated polymer contained in catalyst layer 11A is not particularly limited and preferably contains a unit having a sulfonic acid group and a fluorine atom, and a unit based on a fluorinated olefin. Specific examples of the unit having a sulfonic acid group and a fluorine atom and the unit based on a fluorinated olefin are the same as the units which may be contained in the specific fluorinated polymer in the polymer electrolyte membrane 15.

The catalyst contained in the catalyst layer 11A is not particularly limited and may, for example, be a catalyst having a porous carrier and a metal supported on the porous carrier. Specific examples of the porous carrier and the metal are the same as those of the porous carrier and the metal in the catalyst layer 11C.

Specific examples of the gas diffusion layer 12A which the anode 13 has are the same as the specific examples of the gas diffusion layer 12C, and the gas diffusion layer 12A is an optional member like the gas diffusion layer 12C.

### <Other member>

The membrane electrode assembly 10 may have a carbon layer (not illustrated) between the catalyst layer and the gas diffusion layer.

The carbon layer may contain, for example, carbon and a nonionic fluorinated polymer. As a specific example of the carbon, preferred is a carbon nanofiber having a fiber diameter of 1 to 1000 nm and a fiber length of 1000 µm or less. Specific examples of the nonionic fluorinated polymer include a polytetrafluoroethylene.

### [First solution]

The first solution is a solution selected from solution A and solution B, and is used in the respective embodiments to be described below.

### <Solution A>

Solution A consists solely of water.

### <Solution B>

Solution B contains water and an alcohol.

Specific examples of the alcohol include methanol, ethanol, 1-propanol, 2-propanol, 1-butanol, 2-methyl-1-propanol, 2-butanol, 2-methyl-2-propanol, 2,2,2-trifluoroethanol, 2,2,3,3,3-pentafluoro-1-propanol, 2,2,3,3-tetrafluoro-1-propanol, 4,4,5,5,5-pentafluoro-1-pentanol, 1,1,1,3,3,3-hexafluoro-2-propanol, 3,3,3-trifluoro-1-propanol, 3,3,4,4,5,5,6,6,6-nonafluoro-1-hexanol, and 3,3,4,4,5,5,6,6,7,7,8,8,8-tridecafluoro-1-octanol. In view of more excellent effects of the present invention, ethanol and 1-propanol are preferred. The alcohol may be used alone or in combination of two or more.

The alcohol content in the solution B relative to 100 parts by mass of water in the solution B is 10 parts by mass or less, and in view of more excellent effects of the present invention, preferably 9 parts by mass or less, more preferably 8 parts by mass or less.

The alcohol content in the solution B relative to 100 parts by mass of water in the solution B is more than 0 part by mass, preferably 1 part by mass or more, more preferably 2 parts by mass or more.

### [Second solution]

The second solution is a solution used in the respective embodiments to be described below, and contains water and an alcohol.

Specific examples of the alcohol are the same as the specific examples of the alcohol contained in the solution B. The alcohol may be used alone or in combination of two or more.

The alcohol content in the second solution relative to 100 parts by mass of water in the second solution is 30 parts by mass or more, and in view of more excellent solubility of the specific fluorinated polymer, preferably 35 parts by mass or more, more preferably 40 parts by mass or more.

The alcohol content in the second solution relative to 100 parts by mass of water in the second solution is preferably 400 parts by mass or less, more preferably 360 parts by mass or less, further preferably 350 parts by mass or less.

### [First embodiment]

The method for recovering the specific fluorinated polymer according to a first embodiment of the present invention (hereinafter also referred to as "the recovery method of the first embodiment") is a method for recovering the specific fluorinated polymer from the membrane electrode assembly.

The recovery method of the first embodiment includes a step of bringing the first solution and the membrane electrode assembly into contact with each other (hereinafter also referred to as "step 1-1").

The recovery method of the first embodiment includes, after step 1-1, mixing the membrane electrode assembly that has been brought into contact with the first solution, with the second solution, to obtain a mixed solution containing the specific fluorinated polymer, the second solution, and insoluble substances including the catalyst (hereinafter also referred to as "step 1-2").

The recovery method of the first embodiment includes, after step 1-2, removing the insoluble substances included in the mixed solution and recovering the specific fluorinated polymer contained in the mixed solution from which the insoluble substances have been removed (hereinafter also referred to as "step 1-3").

According to the recovery method of the first embodiment, the recovered specific fluorinated polymer is less likely to be swollen. The reason has not been clearly understood in detail, but is estimated as follows.

After operation of a water electrolyzer or a fuel cell containing the membrane electrode assembly, if the membrane electrode assembly is deteriorated or when the prescribed period of use has expired, the used membrane electrode assembly is recovered and exchanged for a new membrane electrode assembly.

In the catalyst layer of the electrode (at least one of the anode and the cathode), and in the electrolyte membrane, of the recovered membrane electrode assembly, together with the specific fluorinated polymer, at least one of a low molecular weight compound and an oligomer, which is a degradation product of the specific fluorinated polymer, may sometimes be included. Such a low molecular weight compound and an oligomer are considered to be generated by degradation of the specific fluorinated polymer at the time of operation of the above apparatus. In this specification, such a low molecular weight compound and an oligomer may sometimes also be referred to as "polymer degradation products".

In recovery of the specific fluorinated polymer contained in the membrane electrode assembly with a solution having a high alcohol content, the polymer degradation products are recovered together with the specific fluorinated polymer. If the polymer degradation products are included in the recovered product together with the specific fluorinated polymer, they may sometimes cause swelling of the specific fluorinated polymer, thus lowering the performance of the apparatus (for example, power generation performance and durability of the apparatus) containing a membrane electrode assembly formed by using the recovered product.

It is estimated that in order to overcome such problems, according to the recovery method of the first embodiment, by conducting step 1-1 before step 1-2, the polymer degradation products included in the membrane electrode assembly are eluted into the first solution and removed or reduced from the membrane electrode assembly, whereby the above excellent effects are achieved.

### <Step 1-1>

Step 1-1 is a step of bringing the first solution and the membrane electrode assembly into contact with each other.

By this step, the polymer degradation products contained in the catalyst layer of the anode, the catalyst layer of the cathode and the electrolyte membrane included in the membrane electrode assembly, are eluted into the first solution, and thus the membrane electrode assembly in which the polymer degradation products are removed or reduced can be obtained.

In step 1-1, the solution A containing no alcohol at all or the solution B having a low alcohol content is used as the first solution, and thus elution of the specific fluorinated polymer into the first solution is suppressed.

Specific examples of the method of bringing the first solution and the membrane electrode assembly into contact with each other include a method of dipping the membrane electrode assembly in the first solution and a method of spraying the first solution over the surface of the membrane electrode assembly by a spraying apparatus such as a spray. Particularly, the dipping method is preferred, whereby the polymer degradation products are more likely to be eluted into the first solution. Further, it is preferred to stir the solution during dipping, whereby the polymer degradation products are more likely to be eluted into the first solution.

The first solution may or may not be heated, and is preferably heated, whereby elution of the polymer degradation products is promoted, and the polymer degradation products can further be removed or reduced from the membrane electrode assembly.

The temperature of the first solution is preferably 5°C or higher, and with a view to further achieving the above effects, more preferably 35°C or higher, further preferably 75°C or higher.

With a view to suppressing elution of the specific fluorinated polymer into the first solution and with a view to further improving the recovery rate of the specific fluorinated polymer in step 1-3, the temperature of the first solution is preferably 160°C or lower, more preferably 140°C or lower, further preferably 130°C or lower.

In a case where the first solution is heated, the temperature of the first solution is preferably lower than the temperature of the second solution used in step 1-2 to be described below, in view of more excellent polymer recovery rate.

In a case where the temperature of the first solution is lower than the temperature of the second solution, the temperature difference (that is (the temperature of the second solution)-(the temperature of the first solution)) is, in view of more excellent effects of the present invention, preferably 5°C or more, more preferably 10°C or more, further preferably 20°C or more, and is preferably 120°C or less, more preferably 115°C or less, further preferably 100°C or less.

The time for the contact of the first solution and the membrane electrode assembly is not particularly limited and is preferably 1 minute or longer, more preferably 5 minutes or longer, and is preferably 24 hours or shorter, more preferably 16 hours or shorter.

The amount of the first solution used relative to 100 parts by mass of the membrane electrode assembly is, in view of more excellent effects of the present invention, preferably 200 parts by mass or more, more preferably 500 parts by mass or more, and with a view to suppressing the waste liquid, preferably 1,000,000,000 parts by mass or less, more preferably 100,000,000 parts by mass or less, further preferably 10,000,000 parts by mass or less.

In step 1-1, as the first solution, either the solution A or the solution B may be used, however, with a view to further removing or reducing the polymer degradation products, and with a view to suppressing elution of the specific fluorinated polymer, it is preferred to use the solution A.

Particularly, when the heated solution A is used in step 1-1, the polymer degradation products can further be removed as compared with use of the non-heated solution A, and elution of the specific fluorinated polymer can be suppressed as compared with use of the solution B to be described below. Accordingly, the specific fluorinated polymer recovery rate can further be improved in step 1-3 to be described below.

With a view to further achieving the above effects, the temperature of the solution A, when the heated solution A is used, is preferably 40°C or higher, more preferably 80°C or higher.

In step 1-1, after the first solution and the membrane electrode assembly are brought into contact with each other, a drying treatment of drying the membrane electrode assembly may be conducted. By using the membrane electrode assembly after subjected to the drying treatment, in step 1-2 to be described below, the membrane electrode assembly will readily be charged (that is, handling efficiency of the membrane electrode assembly will improve) in step 1-2, and the concentration of the mixed solution obtained in step 1-2 will readily be controlled.

The drying treatment method may be natural drying, drying by heating, air drying or a combination thereof.

The drying temperature is preferably 10°C or higher, more preferably 20°C or higher, and is preferably 160°C or lower, more preferably 120°C or lower.

As described above, the polymer degradation products that are removed or reduced from the membrane electrode assembly in step 1-1 are components generated by degradation of the specific fluorinated polymer, and may, for example, be a low molecular weight compound and an oligomer.

The molecular weight of the low molecular weight compound is preferably 1000 or less, more preferably 800 or less, and is preferably 10 or more, more preferably 100 or more.

The molecular weight of the oligomer is preferably 10,000 or less, more preferably 5,000 or less, and is preferably more than 1,000, more preferably 2,000 or more.

### <Step 1-2>

Step 1-2 is conducted after step 1-1, and is a step of mixing the membrane electrode assembly that has been brought into contact with the first solution, with the second solution to obtain a mixed solution containing the specific fluorinated polymer, the second solution, and insoluble substances including the catalyst.

In this step, the specific fluorinated polymer in the catalyst layer of the anode, the catalyst layer of the cathode, and the electrolyte membrane included in the membrane electrode assembly, is eluted into the second solution and is contained in the mixed solution. Further, components that are insoluble in the second solution, such as the catalyst, are included in the mixed solution as the insoluble substances.

The specific fluorinated polymer (particularly the specific fluorinated polymer having a unit represented by the above formula (1)) contained in each material of the membrane electrode assembly, has a high solubility in a mixed solvent of an alcohol and water, and the second solution has a high alcohol content. Thus, by conducting step 1-2, the specific fluorinated polymer contained in each material of the membrane electrode assembly is eluted into the second solution.

A specific example of the method of mixing the membrane electrode assembly with the second solution may be a method of dipping the membrane electrode assembly in the second solution, followed by stirring.

The second solution may or may not be heated, and is preferably heated, whereby elution of the specific fluorinated polymer will be promoted.

The temperature of the second solution is preferably 15°C or higher, and with a view to further achieving the above effects, more preferably 40°C or higher, further preferably 80°C or higher.

The time of mixing the membrane electrode assembly and the second solution is not particularly limited and is preferably 15 minutes or longer, more preferably 60 minutes or longer, and is preferably 72 hours or shorter, more preferably 36 hours or shorter.

The amount of the second solution used relative to 100 parts by mass of the membrane electrode assembly is, in view of more excellent effects of the present invention, preferably 100 parts by mass or more, more preferably 150 parts by mass or more, further preferably 200 parts by mass or more. Further, with a view to preventing the concentration of the fluorinated polymer in a liquid obtained in step 1-3 to be described below from becoming too low, and with a view to readily reusing the liquid containing the fluorinated polymer obtained in step 1-3, the amount is preferably 2000 parts by mass or less, more preferably 1500 parts by mass or less, further preferably 1000 parts by mass or less.

The insoluble substances may include, in addition to the catalyst, the material constituting the reinforcing material, the material constituting the gas diffusion layer, the material constituting the carbon layer, the material constituting a porous transport layer, etc.

The components included in the insoluble substances may be recovered and reused.

### <Step 1-3>

Step 1-3 is conducted after step 1-2 and is a step of removing the insoluble substances contained in the mixed solution, and recovering the specific fluorinated polymer contained in the mixed solution from which the insoluble substances have been removed.

As a method of removing the insoluble substances, a known method may be employed, such as centrifugal separation, filtration through a filter, or sedimentation, and in view of more excellent removal efficiency, it is preferred to combine two or more methods (particularly centrifugal separation and filtration through a filter).

A method of recovering the specific fluorinated polymer contained in the mixed solution from which the insoluble substances have been removed is not particularly limited, and a known method may be employed.

The weight average molecular weight (hereinafter also referred to as "Mw") of the recovered specific fluorinated polymer is preferably 10,000 or more, more preferably 30,000 or more, further preferably 50,000 or more, and is preferably 3,000,000 or less, more preferably 2,000,000 or less, further preferably 1,000,000 or less.

Mw of the specific fluorinated polymer is a weight average molecular weight as calculated as polyethylene oxide measured by size exclusion gas chromatography (SEC) using the mixed solution from which the insoluble substances have been removed in step 1-3, under the following conditions.
Apparatus: manufactured by Tosoh Corporation, 8320GPC
Column: manufactured by Tosoh Corporation, a-M and a-3000
Mobile phase: 10 mM di-n-butylammonium acetate (DBAA) added methanol (for HPLC)
Flow rate: 1.0 mL/min
Oven temperature: 37°C
System temperature: 37°C
Injection amount: 50 µL
Detector: Evaporative light scattering detector (ELSD)

The recovered specific fluorinated polymer is suitable for production of the electrolyte membrane, the catalyst layer of the anode, the catalyst layer of the cathode, etc., but is not limited thereto and may be used for other applications.

### [Second embodiment]

A method for recovering the specific fluorinated polymer according to a second embodiment of the present invention (hereinafter also referred to as "recovery method of the second embodiment") is a method for recovering the specific fluorinated polymer from the above-described membrane electrode assembly, the specific fluorinated polymer being the specific fluorinated polymer contained in the electrolyte membrane.

The recovery method of the second embodiment includes a step of separating the electrolyte membrane from the above membrane electrode assembly (hereinafter also referred to as "2-0").

The recovery method of the second embodiment includes, after step 2-0, a step of bringing the separated electrolyte membrane and the first solution into contact with each other (hereinafter also referred to as "step 2-1").

The recovery method of the second embodiment includes, after step 2-1, a step of mixing the electrolyte membrane that has been brought into contact with the first solution with the second solution to obtain a mixed solution containing the specific fluorinated polymer, the second solution and the insoluble substances (hereinafter also referred to as "step 2-2").

The recovery method of the second embodiment includes, after step 2-2, a step of recovering the insoluble substances contained in the mixed solution and recovering the specific fluorinated polymer contained in the mixed solution from which the insoluble substances have been removed (hereinafter also referred to as "step 2-3").

By the recovery method of the second embodiment, from the same reason as that of the recovery method of the first embodiment, the recovered specific fluorinated polymer is less likely to be swollen.

That is, it is estimated that according to the recovery method of the first embodiment, by conducting step 2-1 before step 2-2, a low molecular weight compound included in the electrolyte membrane is eluted into the first solution and the polymer degradation products are removed or reduced from the electrolyte membrane and as a result, the above excellent effects are achieved.

The recovery method of the second embodiment is the same as the recovery method of the first embodiment except that the electrolyte membrane separated from the membrane electrode assembly is used instead of the membrane electrode assembly. Accordingly, in the following description of the respective steps in the recovery method of the second embodiment, the description of the same items as in the recovery method of the first embodiment may sometimes be omitted.

### <Step 2-0>

Step 2-0 is a step of separating the electrolyte membrane from the membrane electrode assembly. The electrolyte membrane obtained in this step (that is, the separated electrolyte membrane) is used in step 2-1 to be described below.

A method of separating the electrolyte membrane from the membrane electrode assembly is not particularly limited and may, for example, be a method of attaching an adhesive tape to the surface of the electrodes (anode and cathode) and separating the electrodes together with the adhesive tape, or a method of weakening the bond between the electrolyte membrane and the electrodes by irradiation with laser and then separating the electrolyte membrane from the electrodes. These methods may be combined.

Further, the method of separating the electrolyte membrane from the membrane electrode assembly may, for example, be a method of bringing the membrane electrode assembly or only the electrodes into contact with a solution which dissolves the specific fluorinated polymer (for example, the second solution) to remove the electrodes. However, such a method of using the solution may dissolve the specific fluorinated polymer also in the electrolyte membrane, and thus with a view to suppressing dissolution of the specific fluorinated polymer in the electrolyte membrane, the contact is preferably contact with a small amount of the solution (for example, 100 to 300 parts by mass relative to 100 parts by mass of the membrane electrode assembly or the electrodes) in a short time (for example 1 to 30 minutes).

### <Step 2-1>

Step 2-1 is conducted after step 2-0, and is a step of bringing the first solution and the electrolyte membrane separated from the membrane electrode assembly into contact with each other. By this step, a low molecular weight compound included in the electrolyte membrane is eluted into the first solution, whereby the electrolyte membrane from which the polymer degradation products have been removed or reduced can be obtained.

Specific examples of the method of bringing the first solution and the electrolyte membrane into contact with each other are the same as those in step 1-1 of the first embodiment, including the preferred embodiments.

The first solution may or may not be heated, and is preferably heated, whereby elution of the low molecular weight compound will be promoted, and the polymer degradation products can further be removed or reduced from the electrolyte membrane.

The temperature of the first solution is the same as the temperature of the first solution in step 1-1 of the first embodiment, including the preferred embodiments.

In a case where the first solution is heated, the temperature of the first solution is preferably lower than the temperature of the second solution used in step 2-2 to be described below, in view of more excellent polymer recovery rate.

In a case where the temperature of the first solution is lower than the temperature of the second solution, the temperature difference (that is (the temperature of the second solution) -(the temperature of the first solution)) is the same as the temperature difference of the solutions in step 1-1 in the first embodiment, including the preferred embodiments.

The time for contact of the first solution and the electrolyte membrane is the same as the time in step 1-1 of the first embodiment, including the preferred embodiments.

The amount of the first solution used relative to 100 parts by mass of the electrolyte membrane is, in view of more excellent effects of the present invention, preferably 200 parts by mass or more, more preferably 500 parts by mass or more, and with a view to suppressing waste liquid, preferably 1,000,000,000 parts by mass or less, more preferably 100,000,000 parts by mass or less, further preferably 10,000,000 parts by mass or less.

In step 2-1, either the solution A or the solution B may be used as the first solution, however, it is preferred to use the solution A, with a view to further removing or reducing the polymer degradation products and with a view to suppressing elution of the specific fluorinated polymer.

Particularly in a case where the heated solution A is used in step 2-1, the elution of the specific fluorinated polymer can be suppressed, whereby the specific fluorinated polymer recovery rate in step 2-3 to be described below can further be improved.

In step 2-1, it is possible to conduct a drying step of drying the electrolyte membrane after the first solution and the electrolyte membrane are brought into contact with each other.

The details of the drying treatment are the same as those of the drying treatment in step 1-1 of the first embodiment, including the preferred embodiments.

As described above, the polymer degradation products removed or reduced from the electrolyte membrane in step 2-1 are components generated by degradation of the specific fluorinated polymer, and may, for example, be a low molecular weight compound and an oligomer.

The molecular weight of the low molecular weight compound is preferably 1000 or less, more preferably 800 or less, and is preferably 10 or more, more preferably 100 or more.

The molecular weight of the oligomer is preferably 10,000 or less, more preferably 5,000 or less, and is preferably more than 1,000, more preferably 2,000 or more.

### <Step 2-2>

Step 2-2 is conducted after step 2-1, and is a step of mixing the electrolyte membrane that has been brought into contact with the first solution with the second solution to obtain a mixed solution containing the specific fluorinated polymer, the second solution, and the insoluble substances.

In this step, the specific fluorinated polymer in the electrolyte membrane is eluted into the second solution and is thereby contained in the mixed solution. Further, components insoluble in the second solution are contained in the mixed solution as the insoluble substances.

Specific examples of a method of mixing the second solution and the electrolyte membrane are the same as those of the mixing method in step 1-2 of the first embodiment, and the description is omitted.

The second solution may or may not be heated, and is preferably heated, whereby elution of the specific fluorinated polymer will be promoted.

The temperature of the second solution is the same as the temperature of the second solution in step 1-2 of the first embodiment, including the preferred embodiments.

The time of mixing the second solution and the electrolyte membrane is the same as the time in step 1-2 of the first embodiment, including the preferred embodiments.

The amount of the second solution used relative to 100 parts by mass of the electrolyte membrane is, in view of more excellent effects of the present invention, preferably 100 parts by mass or more, more preferably 150 parts by mass or more, further preferably 200 parts by mass or more. Further, with a view to preventing the concentration of the fluorinated polymer in a liquid obtained in step 1-3 to be described below from becoming too low, and with a view to readily reusing the liquid containing the fluorinated polymer obtained in step 1-3, the amount is preferably 2000 parts by mass or less, more preferably 1500 parts by mass or less, further preferably 1000 parts by mass or less.

Specific examples of the insoluble substances include the materials constituting the above described reinforcing material.

The components included in the insoluble substances may be recovered and reused.

### <Step 2-3>

Step 2-3 is conducted after step 2-2 and is a method of removing the insoluble substances contained in the mixed solution and recovering the specific fluorinated polymer contained in the mixed solution from which the insoluble substances have been removed.

A method of removing the insoluble substances is the same as the removal method in step 1-3 of the first embodiment.

A method of recovering the specific fluorinated polymer contained in the mixed solution from which the insoluble substances have been removed, is not particularly limited, and a known method may be employed.

Mw of the recovered specific fluorinated polymer is preferably 10,000 or more, more preferably 30,000 or more, further preferably 50,000 or more, and is preferably 3,000,000 or less, more preferably 2,000,000 or less, further preferably 1,000,000 or less.

Mw of the specific fluorinated polymer is measured by the same method as for the specific fluorinated polymer in the first embodiment.

The recovered specific fluorinated polymer is suitable for the electrolyte membrane, the catalyst layer of the anode, the catalyst layer of the cathode, etc., but is not limited thereto, and may be used for other applications.

### [Third embodiment]

The method for recovering the specific fluorinated polymer according to a third embodiment of the present invention (hereinafter also referred to as "the recovery method of the third embodiment") is a method for recovering the specific fluorinated polymer from the above-described membrane electrode assembly, the specific fluorinated polymer being at least one of the specific fluorinated polymer contained in the catalyst layer of the anode and the specific fluorinated polymer contained in the catalyst layer of the cathode.

The recovery method of the third embodiment includes a step of separating at least one of the anode and the cathode from the membrane electrode assembly (hereinafter also referred to as step "3-0").

The recovery method of the third embodiment includes, after step 3-0, a step of bringing the at least one of the anode and the cathode separated, into contact with the first solution (hereinafter referred to as step "3-1").

The recovery method of the third embodiment includes, after step 3-1, a step of mixing the at least one of the anode and the cathode that has been brought into contact with the first solution, with the second solution, to obtain a mixed solution containing the specific fluorinated polymer, the second solution, and the insoluble substances including the catalyst (hereinafter referred to as step "3-2").

Further, the recovery method of the third embodiment includes, after step 3-2, a step of removing the insoluble substances contained in the mixed solution and recovering the specific fluorinated polymer contained in the mixed solution from which the insoluble substances are removed (hereinafter referred to as step "3-3").

By the recovery method of the third embodiment, from the same reason as that of the recovery method of the first embodiment, the recovered specific fluorinated polymer is less likely to be swollen.

That is, it is estimated that according to the recovery method of the first embodiment, by conducting step 3-1 before step 3-2, the low molecular weight compound contained in the electrode is eluted into the first solution, and the polymer degradation products are removed or reduced from the electrode, whereby the above excellent effects are achieved.

In this specification, the "electrode" means at least one of the anode and the cathode, unless otherwise specified.

### <Step 3-0>

Step 3-0 is a step of separating the electrode from the membrane electrode assembly. The electrode obtained in this step (that is, the separated electrode) is used in step 3-1 to be described below. In step 3-0, only the anode may be separated, only the cathode may be separated, or both the anode and the cathode may be separated.

A method of separating the electrode from the membrane electrode assembly is not particularly limited and may, for example, be a method of attaching an adhesive tape to the surface of the electrode and separating the electrode together with the adhesive tape, or a method of weakening the bond between the electrolyte membrane and the electrode by irradiation with laser and then separating the electrode from the electrolyte membrane. These methods may be combined.

Further, a method of separating the electrode from the membrane electrode assembly may, for example, be a method of bringing the membrane electrode assembly into contact with a solution which dissolves the specific fluorinated polymer in the electrolyte membrane (for example the second solution) to separate the electrode. However, such a method of using the solution may dissolve the specific fluorinated polymer in the electrode, and thus with a view to suppressing dissolution of the specific fluorinated polymer in the electrode, the contact is preferably contact with a small amount of a solution (for example, 100 to 300 parts by mass relative to 100 parts by mass of the membrane electrode assembly or the electrode) in a short time (for example 1 to 30 minutes).

### <Step 3-1>

Step 3-1 is conducted after step 3-0, and is a step of bringing the first solution and the electrode separated from the membrane electrode assembly into contact with each other. In step 3-1, only the anode separated from the membrane electrode assembly may be used, only the cathode separated from the membrane electrode assembly may be used, or both the anode and the cathode separated from the membrane electrode assembly may be used. In a case where both the anode and the cathode are separated from the membrane electrode assembly, in step 3-1, the anode and the cathode together are brought into contact with the first solution, or the anode and the cathode may be brought into contact with the first solution separately.

By this step, the low molecular weight compound contained in the electrode are eluted into the first solution, whereby the electrode from which the polymer degradation products are removed or reduced can be obtained.

Specific examples of the method of bringing the first solution and the electrode in contact with each other are the same as those in step 1-1 of the first embodiment, including the preferred embodiments.

The first solution may or may not be heated, and is preferably heated, whereby elution of the low molecular weight compound will be promoted, and the polymer degradation products can further be removed or reduced from the electrode.

The temperature of the first solution is the same as the temperature of the first solution in step 1-1 of the first embodiment, including the preferred embodiments.

In a case where the first solution is heated, the temperature of the first solution is preferably lower than the temperature of the second solution used in step 3-2 to be described below, in view of more excellent polymer recovery rate.

In a case where the temperature of the first solution is lower than the temperature of the second solution, the temperature difference (that is (the temperature of the second solution)-(the temperature of the first solution)) is the same as the temperature difference between the solutions in step 1-1 of the first embodiment, including the preferred embodiments.

The time for contact of the first solution and the electrode is the same as the time in step 1-1 of the first embodiment, including the preferred embodiments.

The amount of the first solution used relative to 100 parts by mass of the electrode is, in view of more excellent effects of the present invention, preferably 200 parts by mass or more, more preferably 500 parts by mass or more. Further, with a view to suppressing the amount of the waste liquid, the amount is preferably 1,000,000,000 parts by mass or less, more preferably 100,000,000 parts by mass or less, further preferably 10,000,000 parts by mass or less.

The amount of the first solution used refers to the amount relative to 100 parts by mass of the anode when only the anode is used as the electrode in step 3-1, refers to the amount relative to 100 parts by mass of the cathode when only the cathode is used as the electrode in step 3-1, and refers to the amount relative to 100 parts by mass of the anode and the cathode when both the anode and the cathode are used as the electrode in step 3-1.

In step 3-1, either the solution A or the solution B may be used as the first solution, and it is preferred to use the solution A, whereby the polymer degradation products can further be removed or reduced, and elution of the specific fluorinated polymer can be suppressed.

Particularly, in a case where the heated solution A is used in step 3-1, elution of the specific fluorinated polymer can be suppressed, and thus the specific fluorinated polymer recovery rate in step 1-3 to be described below can further be improved.

In step 3-1, after the first solution and the electrode are brought into contact with each other, a drying treatment of drying the electrode may be conducted.

The details of the drying treatment are the same as those of the drying treatment in step 1-1 of the first embodiment, including the preferred embodiments.

As described above, the polymer degradation products removed or reduced from the electrode in step 3-1 are components generated by degradation of the specific fluorinated polymer, and may, for example, be a low molecular weight compound and an oligomer.

The molecular weight of the low molecular weight compound is preferably 1000 or less, more preferably 800 or less, and is preferably 10 or more, more preferably 100 or more.

The molecular weight of the oligomer is preferably 10,000 or less, more preferably 5000 or less, and is preferably more than 1000, more preferably 2000 or more.

### <Step 3-2>

Step 3-2 is conducted after step 3-1 and is a step of mixing the electrode that has been brought into contact with the first solution with the second solution to obtain a mixed solution containing the specific fluorinated polymer, the second solution and insoluble substances including the catalyst.

In this step, the specific fluorinated polymer in the electrode is eluted into the second solution and is contained in the mixed solution. Components insoluble in the second solution are contained in the mixed solution as the insoluble substances.

Specific examples of the method of mixing the electrode with the second solution are the same as those of the mixing method in step 1-2 of the first embodiment, and the description is omitted.

The second solution may or may not be heated but is preferably heated, whereby elution of the specific fluorinated polymer will be promoted.

The temperature of the second solution is the same as the temperature of the second solution in step 1-2 of the first embodiment, including the preferred embodiments.

The time for contact of the electrode and the second solution is the same as the time in step 1-2 of the first embodiment, including the preferred embodiments.

The amount of the second solution used relative to 100 parts by mass of the electrode is, in view of more excellent effects of the present invention, preferably 100 parts by mass or more, more preferably 150 parts by mass or more, further preferably 200 parts by mass or more. Further, with a view to preventing the concentration of the fluorinated polymer in a liquid obtained in step 1-3 to be described below from becoming too low, and with a view to readily reusing the liquid containing the fluorinated polymer obtained in step 1-3, the amount is preferably 2000 parts by mass or less, more preferably 1500 parts by mass or less, further preferably 1000 parts by mass or less.

The amount of the second solution used refers to the amount relative to 100 parts by mass of the anode when only the anode is used as the electrode in step 3-2, refers to the amount relative to 100 parts by mass of the cathode when only the cathode is used as the electrode in step 3-2, and refers to the amount relative to 100 parts by mass of the anode and the cathode when both the anode and the cathode are used as the electrode in step 3-2.

The insoluble substances may include, in addition to the catalyst, for example, the material constituting the gas diffusion layer, etc.

The components included in the insoluble substances may be recovered and reused.

### <Step 3-3>

Step 3-3 is conducted after step 3-2 and is a step of removing the insoluble substances contained in the mixed solution and recovering the specific fluorinated polymer contained in the mixed solution from which the insoluble substances are removed.

A method of removing the insoluble substances is the same as the removal method in step 1-3 of the first embodiment.

A method of recovering the specific fluorinated polymer contained in the mixed solution from which the insoluble substances are removed is not particularly limited and a known method may be employed.

Mw of the recovered specific fluorinated polymer is preferably 10,000 or more, more preferably 30,000 or more, further preferably 50,000 or more, and is preferably 3,000,000 or less, more preferably 2,000,000 or less, further preferably 1,000,000 or less.

Mw of the specific fluorinated polymer is measured in the same method as for the specific fluorinated polymer in the first embodiment.

The recovered specific fluorinated polymer is suitable for production of the electrolyte membrane, the catalyst layer of the anode, the catalyst layer of the cathode, etc., but is not limited thereto, and may be used for other applications.

### EXAMPLES

Now, the present invention will be described in further detail with reference to Examples. Ex. 1-1 to 1-4, 2-1 to 2-4 and 3-1 to 3-4 are Examples of the present invention, and Ex. 1-5 to 1-8, 2-5 to 2-8 and 3-5 to 3-8 are Comparative Examples. However, it should be understood that the present invention is by no means restricted to such specific Examples.

### [TQ value]

Using Flow Test CFT-500A (manufactured by Shimadzu Corporation) equipped with a nozzle having a length of 1 mm and an inner diameter of 1 mm, under an extrusion pressure of 2.94 MPa at varied temperatures, the amount of extrusion of each of the fluorinated polymers A to C were measured, and a temperature (TQ value) at which the extrusion amount became 100 mm³/sec was obtained. The results are shown in Table 1.

### [Ratio of constituting units]

The ratio of the constituting units of each of the fluorinated polymers A to C was obtained from the results of ¹⁹F-NMR measurement. The results are shown in Table 1.

### [Ion exchange capacity]

The ion exchange capacity was obtained from the proportions of the constituting units in each of the fluorinated polymers A to C. The results are shown in Table 1.

### [Degree of swelling]

The solution containing the fluorinated polymer recovered in each of Ex. 1-1 to 1-5, Ex. 2-1 to 2-5, and Ex. 3-1 to 3-5 to be described below, is heated at 185°C for 30 minutes to prepare a cast film.

The obtained cast film is dipped in hot water at 80°C for 24 hours and taken out from the hot water, water attached to the surface is wiped off, and then the mass of the cast film is measured.

Then, the cast film is dried at 120°C for 60 minutes and the mass of the cast film after drying is measured. The ratio of the mass of water contained in the cast film before drying (the cast film absorbing water) to the mass of the cast film after drying (that is, the mass of water contained in the cast film before drying/the mass of the cast film after drying) is taken as the degree of swelling.

### [Abbreviations]

TFE:CF₂=CF₂
Monomer (m1): CF₂=CFOCF₂CF(CF₃)OCF₂CF₂SO₂F
Monomer (m2): monomer represented by the following formula (m2)
Monomer (m3): monomer represented by the following formula (m3)

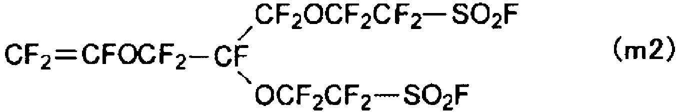

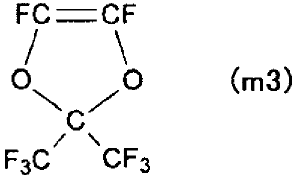

### [Preparation of fluorinated polymer solution A]

In accordance with the method in JP-A-2004-196994, paragraphs [0024] to [0025], a fluorinated polymer having a monomer (m1) unit and a TFE unit was produced, and the -SO₂F group of the fluorinated polymer was converted to a -SO₃H group to obtain - SO₃H form fluorinated polymer A.

Then, into a stainless steel autoclave having an internal capacity of 200 ml, 27 g of the fluorinated polymer A, 46 g of ethanol and 31 g of water were put, and dissolved and dispersed at 105°C at 300 rpm for 6 hours by a helical ribbon impeller to obtain a dispersion having a solids concentration of 26 mass%. Hereinafter this dispersion will be taken as fluorinated polymer solution A.

### [Preparation of fluorinated polymer solution B]

In accordance with the method in WO2017/221840, paragraphs [0098] to [0100], a fluorinated polymer having a monomer (m2) unit and a TFE unit was produced. The obtained fluorinated polymer was mixed with an aqueous KOH solution containing methanol with heating for hydrolysis to convert the -SO₂F group of the fluorinated polymer into a -SO₃K group. Then, the fluorinated polymer having a -SO₃K group was washed with water and mixed in an aqueous sulfuric acid solution to convert the -SO₃K group of the fluorinated polymer into a -SO₃H group to obtain -SO₃H form fluorinated polymer B.

Then, into a stainless steel autoclave having an internal capacity of 200 ml, 20 g of the fluorinated polymer B, 34 g of ethanol and 79 g of water were put, and dissolved and dispersed at 110°C at 300 rpm for 6 hours by a helical ribbon impeller to obtain a dispersion having a solids concentration of 15 mass%. Hereinafter this dispersion will be taken as fluorinated polymer solution B.

### [Preparation of fluorinated polymer solution C]

In accordance with the method described in WO2017/006841, paragraphs [0114] to [0115], a fluorinated polymer having a monomer (m2) unit, a monomer (m3) unit and a TFE unit was produced. The obtained fluorinated polymer was mixed with an aqueous KOH solution containing dimethyl sulfoxide with heating for hydrolysis to convert the -SO₂F group into a -SO₃K group. The fluorinated polymer having the - SO₃K group was washed with water and mixed in an aqueous sulfuric acid solution to convert the -SO₃K group of the fluorinated polymer into a -SO₃H group to obtain -SO₃H form fluorinated polymer C.

Then, into a stainless steel autoclave having an internal capacity of 200 ml, 19 g of the fluorinated polymer C, 64 g of 1-propanol and 64 g of water were put, and dissolved and dispersed at 115°C at 300 rpm for 6 hours by a helical ribbon impeller to obtain a dispersion having a solids concentration of 13 mass%. Hereinafter this dispersion will be taken as fluorinated polymer solution C.

The composition and physical properties of the above obtained fluorinated polymers A to C are shown in Table 1. In Table 1, meq/g refers to milliequivalent/g dry resin.

**Table 1**

| Fluorinated polymer | Constituting units (mol%) | | | | Ion exchange capacity (meq/g) | TQ value (°C) |
|---|---|---|---|---|---|---|
| | m1 | m2 | m3 | TFE | | |
| A | 18 | | | 82 | 1.1 | 230 |
| B | | 20 | | 80 | 2 | 236 |
| C | | 17 | 67 | 16 | 1.2 | 275 |

### [Production of polymer electrolyte membrane]

### <Electrolyte membrane A>

The fluorinated polymer solution A was applied to a surface of a sheet composed of an ethylene/TFE copolymer (manufactured by AGC Inc., AFLEX (registered trademark) 100N, thickness 100 µm) (hereinafter referred to as ETFE sheet) by a die coater and dried at 80°C for 30 minutes and further subjected to a heat treatment at 185°C for 30 minutes to obtain a 20 µm-thick polymer electrolyte membrane. This polymer electrolyte membrane will be taken as electrolyte membrane A.

### <Electrolyte membrane B>

Electrolyte membrane B was obtained in the same manner as in production of the electrolyte membrane A except that the fluorinated polymer solution A used for production of the polymer electrolyte membrane was changed to the fluorinated polymer solution B.

### [Membrane electrode assembly]

In the same manner as the method in WO2016/104380, paragraphs [0136] to [0138], except that the fluorinated polymer solution A or the fluorinated polymer solution C was used as the liquid composition used for preparation of the catalyst layer-forming liquid, each of membrane electrode assemblies MEA1, MEA2 and MEA3 having an anode formed on one surface of the polymer electrolyte membrane and a cathode formed on the other surface.

The constitution of each of the obtained membrane electrode assemblies is shown in Table 2.

**Table 2**

| Membrane electrode assembly | Polymer electrolyte membrane | | Cathode | | Anode | |
|---|---|---|---|---|---|---|
| | Electrolyte membrane | Ion exchange capacity (meq/g) | Fluorinated polymer | Ion exchange capacity (meq/g) | Fluorinated polymer | Ion exchange capacity (meq/g) |
| MEA1 | Electrolyte membrane A | 1.1 | Fluorinated polymer A | 1.1 | Fluorinated polymer A | 1.1 |
| MEA2 | Electrolyte membrane B | 2 | Fluorinated polymer A | 1.1 | Fluorinated polymer A | 1.1 |
| MEA3 | Electrolyte membrane B | 2 | Fluorinated polymer C | 1.2 | Fluorinated polymer A | 1.1 |

### [Power generation test]

Power generation test was conducted in the same method as in Japanese Patent No.5168903, paragraph [0103], expect that the above obtained membrane electrode assembly was used.

### [Ex. 1-1]

### <Step 1-1>

From a polymer electrolyte fuel cell having the MEA1 after the power generation test, 10 g of the MEA1 (that is, used MEA1) was recovered and dipped in 100 g of water (first solution) at 90°C for 6 hours. Then, the MEA1 after dipping was dried at 80°C for 3 hours. In such a manner, the MEA1 which had been dipped in the first solution was obtained.

### <Step 1-2>

The MEA1 which had been dipped in the first solution was dipped in a second solution including 20 g of water and 20 g of 1-propanol and heated so that the internal temperature would be 105°C, stirred at 105°C for 4 hours and cooled to obtain a mixed solution.

### <Step 1-3>

Insoluble components such as the catalyst contained in the mixed solution were precipitated by centrifugal separation (at 3000 G) for 30 minutes, and the supernatant liquid was recovered, which was subjected to filtration through a 10 µm filter to remove fine insoluble components, whereby a solution containing the fluorinated polymer was recovered.

### [Ex. 1-2 and Ex. 1-3]

A solution containing the fluorinated polymer was recovered in the same manner as in Ex. 1-1 except that the MEA2 after the power generation test or the MEA3 after the power generation test was used instead of the MEA1 after the power generation test.

### [Ex. 1-4]

A solution containing the fluorinated polymer was recovered in the same manner as in Ex. 1-1 except that in step 1-1, a first solution (liquid temperature: 25°C) including 95 g of water and 5 g of ethanol was used instead of 100 g of water at 90°C.

### [Ex. 1-5]

A solution containing the fluorinated polymer was recovered in the same manner as in Ex. 1-1 except that step 1-1 was not conducted.

### [Ex. 1-6]

A solution containing the fluorinated polymer was recovered in the same manner as in Ex. 1-2 except that step 1-1 was not conducted.

### [Ex. 1-7]

A solution containing the fluorinated polymer was recovered in the same manner as in Ex. 1-3 except that step 1-1 was not conducted.

### [Ex. 1-8]

A solution containing the fluorinated polymer was recovered in the same manner as in Ex. 1-4 except that step 1-1 was not conducted.

**Table 3**

| | Membrane electrode assembly | Polymer electrolyte membrane | | Cathode | | Anode | | First solution | |
|---|---|---|---|---|---|---|---|---|---|
| | | Electrolyte membrane | Ion exchange capacity | Fluorinated polymer | Ion exchange capacity | Fluorinated polymer | Ion exchange capacity | Solvent | Temperature |
| | | | (meq/g) | | (meq/g) | | (meq/g) | | (°C) |
| Ex. 1-1 | MEA1 | Electrolyte membrane A | 1.1 | Fluorinated polymer A | 1.1 | Fluorinated polymer A | 1.1 | Water | 90 |
| Ex. 1-2 | MEA2 | Electrolyte membrane B | 2 | Fluorinated polymer A | 1.1 | Fluorinated polymer A | 1.1 | Water | 90 |
| Ex. 1-3 | MEA3 | Electrolyte membrane B | 2 | Fluorinated polymer C | 1.2 | Fluorinated polymer A | 1.1 | Water | 90 |
| Ex. 1-4 | MEA1 | Electrolyte membrane A | 1.1 | Fluorinated polymer A | 1.1 | Fluorinated polymer A | 1.1 | Ethanol and water | 25 |
| Ex. 1-5 | MEA1 | Electrolyte membrane A | 1.1 | Fluorinated polymer A | 1.1 | Fluorinated polymer A | 1.1 | Nil | - |
| Ex. 1-6 | MEA2 | Electrolyte membrane B | 2 | Fluorinated polymer A | 1.1 | Fluorinated polymer A | 1.1 | Nil | - |
| Ex. 1-7 | MEA3 | Electrolyte membrane B | 2 | Fluorinated polymer C | 1.2 | Fluorinated polymer A | 1.1 | Nil | - |
| Ex. 1-8 | MEA1 | Electrolyte membrane A | 1.1 | Fluorinated polymer A | 1.1 | Fluorinated polymer A | 1.1 | Nil | - |

The degree of swelling measured by using the recovered fluorinated polymer in Ex. 1-1 was lower than the degree of swelling measured by using the recovered fluorinated polymer in Ex. 1-5.

The degree of swelling measured by using the recovered fluorinated polymer in Ex. 1-2 was lower than the degree of swelling measured by using the recovered fluorinated polymer in Ex. 1-6.

The degree of swelling measured by using the recovered fluorinated polymer in Ex. 1-3 was lower than the degree of swelling measured by using the recovered fluorinated polymer in Ex. 1-7.

The degree of swelling measured by using the recovered fluorinated polymer in Ex. 1-4 was lower than the degree of swelling measured by using the recovered fluorinated polymer in Ex. 1-8.

### [Ex. 2-1]

### <Step 2-0>

From a polymer electrolyte fuel cell having the MEA1 after the power generation test, 10 g of the MEA1 (that is used MEA1) was recovered, and separated into the electrolyte membrane and the electrodes.

### <Step 2-1>

7.7 g of the separated electrolyte membrane was dipped in 100 g of water (the first solution) at 90°C for 6 hours. The dipped electrolyte membrane was dried at 80°C for 3 hours, whereby the electrolyte membrane which has been dipped in the first solution was obtained.

### <Step 2-2>

The electrolyte membrane which has been dipped in the first solution was dipped in a second solution including 20 g of water and 20 g of 1-propanol and heated so that the internal temperature would be 105°C, stirred at 105°C for 4 hours and cooled to obtain a mixed solution.

### <Step 2-3>

Insoluble components contained in the mixed solution were precipitated by centrifugal separation (at 3000 G) for 30 minutes, and the supernatant liquid was recovered, which was subjected to filtration through a 10 µm filter to remove fine insoluble components, whereby a solution containing the fluorinated polymer was recovered.

### [Ex. 2-2 and Ex. 2-3]

A solution containing the fluorinated polymer was recovered in the same manner as in Ex. 2-1 except that the MEA2 after the power generation test or the MEA3 after the power generation test was used instead of the MEA1 after the power generation test.

### [Ex. 2-4]

A solution containing the fluorinated polymer was recovered in the same manner as in Ex. 2-1 except that in step 2-1, a first solution (liquid temperature: 25°C) including 95 g of water and 5 g of ethanol was used instead of 100 g of water at 90°C.

### [Ex. 2-5]

A solution containing the fluorinated polymer was recovered in the same manner as in Ex. 2-1 except that step 2-1 was not conducted.

### [Ex. 2-6]

A solution containing the fluorinated polymer was recovered in the same manner as in Ex. 2-2 except that step 2-1 was not conducted.

### [Ex. 2-7]

A solution containing the fluorinated polymer was recovered in the same manner as in Ex. 2-3 except that step 2-1 was not conducted.

### [Ex. 2-8]

A solution containing the fluorinated polymer was recovered in the same manner as in Ex. 2-4 except that step 2-1 was not conducted.

**Table 4**

| | Membrane electrode assembly | Polymer electrolyte membrane | | Cathode | | Anode | | First solution | |
|---|---|---|---|---|---|---|---|---|---|
| | | Electrolyte membrane | Ion exchange capacity | Fluorinated polymer | Ion exchange capacity | Fluorinated polymer | Ion exchange capacity | Solvent | Temperature |
| | | | (meq/g) | | (meq/g) | | (meq/g) | | (°C) |
| Ex. 2-1 | MEA1 | Electrolyte membrane A | 1.1 | Fluorinated polymer A | 1.1 | Fluorinated polymer A | 1.1 | Water | 90 |
| Ex. 2-2 | MEA2 | Electrolyte membrane B | 2 | Fluorinated polymer A | 1.1 | Fluorinated polymer A | 1.1 | Water | 90 |
| Ex. 2-3 | MEA3 | Electrolyte membrane B | 2 | Fluorinated polymer C | 1.2 | Fluorinated polymer A | 1.1 | Water | 90 |
| Ex. 2-4 | MEA1 | Electrolyte membrane A | 1.1 | Fluorinated polymer A | 1.1 | Fluorinated polymer A | 1.1 | Ethanol and water | 25 |
| Ex. 2-5 | MEA1 | Electrolyte membrane A | 1.1 | Fluorinated polymer A | 1.1 | Fluorinated polymer A | 1.1 | Nil | - |
| Ex. 2-6 | MEA2 | Electrolyte membrane B | 2 | Fluorinated polymer A | 1.1 | Fluorinated polymer A | 1.1 | Nil | - |
| Ex. 2-7 | MEA3 | Electrolyte membrane B | 2 | Fluorinated polymer C | 1.2 | Fluorinated polymer A | 1.1 | Nil | - |
| Ex. 2-8 | MEA1 | Electrolyte membrane A | 1.1 | Fluorinated polymer A | 1.1 | Fluorinated polymer A | 1.1 | Nil | - |

The degree of swelling measured by using the recovered fluorinated polymer in Ex. 2-1 was lower than the degree of swelling measured by using the recovered fluorinated polymer in Ex. 2-5.

The degree of swelling measured by using the recovered fluorinated polymer in Ex. 2-2 was lower than the degree of swelling measured by using the recovered fluorinated polymer in Ex. 2-6.

The degree of swelling measured by using the recovered fluorinated polymer in Ex. 2-3 was lower than the degree of swelling measured by using the recovered fluorinated polymer in Ex. 2-7.

The degree of swelling measured by using the recovered fluorinated polymer in Ex. 2-4 was lower than the degree of swelling measured by using the recovered fluorinated polymer in Ex. 2-8.

### [Ex. 3-1]

From a polymer electrolyte fuel cell having the MEA1 after the power generation test, 10 g of the MEA1 (that is used MEA1) was recovered,

### <Step 3-0>

From a polymer electrolyte fuel cell having the MEA1, 10 g of the used MEA1 was recovered and separated into the electrolyte membrane and the electrodes (both the anode and the cathode, the same applies hereinafter).

### <Step 3-1>

2.3 g of the separated electrodes (1.15 g of the anode, 1.15 g of the cathode) were dipped in 100 g of water (the first solution) at 90°C for 6 hours, and the dipped electrodes were dried at 80°C for 3 hours, whereby the electrodes which have been dipped in the first solution were obtained.

### <Step 3-2>

The electrodes which have been dipped in the first solution were dipped in a second solution including 20 g of water and 20 g of 1-propanol and heated so that the internal temperature would be 105°C, and stirred at 105°C for 4 hours and cooled to obtain a mixed solution.

### <Step 3-3>

Insoluble components such as the catalyst were precipitated by centrifugal separation, and the supernatant liquid was recovered, which was subjected to filtration through a 10 µm filter to remove fine insoluble components, whereby a solution containing the fluorinated polymer was recovered.

### [Ex. 3-2 and Ex. 3-3]

A solution containing the fluorinated polymer was recovered in the same manner as in Ex. 3-1 except that the MEA2 after the power generation test or the MEA3 after the power generation test was used instead of the MEA1 after the power generation test.

### [Ex. 3-4]

A solution containing the fluorinated polymer was recovered in the same manner as in Ex. 3-1 except that in step 3-1, a first solution (liquid temperature: 25°C) including 95 g of water and 5 g of ethanol was used instead of 100 g of water at 90°C.

### [Ex. 3-5]

A solution containing the fluorinated polymer was recovered in the same manner as in Ex. 3-1 except that step 3-1 was not conducted.

### [Ex. 3-6]

A solution containing the fluorinated polymer was recovered in the same manner as in Ex. 3-2 except that step 3-1 was not conducted.

### [Ex. 3-7]

A solution containing the fluorinated polymer was recovered in the same manner as in Ex. 3-3 except that step 3-1 was not conducted.

### [Ex. 3-8]

A solution containing the fluorinated polymer was recovered in the same manner as in Ex. 3-4 except that step 3-1 was not conducted.

**Table 5**

| | Membrane electrode assembly | Polymer electrolyte membrane | | Cathode | | Anode | | First solution | |
|---|---|---|---|---|---|---|---|---|---|
| | | Electrolyte membrane | Ion exchange capacity | Fluorinated polymer | Ion exchange capacity | Fluorinated polymer | Ion exchange capacity | Solvent | Temperature |
| | | | (meq/g) | | (meq/g) | | (meq/g) | | (°C) |
| Ex. 3-1 | MEA1 | Electrolyte membrane A | 1.1 | Fluorinated polymer A | 1.1 | Fluorinated polymer A | 1.1 | Water | 90 |
| Ex. 3-2 | MEA2 | Electrolyte membrane B | 2 | Fluorinated polymer A | 1.1 | Fluorinated polymer A | 1.1 | Water | 90 |
| Ex. 3-3 | MEA3 | Electrolyte membrane B | 2 | Fluorinated polymer C | 1.2 | Fluorinated polymer A | 1.1 | Water | 90 |
| Ex. 3-4 | MEA1 | Electrolyte membrane A | 1.1 | Fluorinated polymer A | 1.1 | Fluorinated polymer A | 1.1 | Ethanol and water | 25 |
| Ex. 3-5 | MEA1 | Electrolyte membrane A | 1.1 | Fluorinated polymer A | 1.1 | Fluorinated polymer A | 1.1 | Nil | - |
| Ex. 3-6 | MEA2 | Electrolyte membrane B | 2 | Fluorinated polymer A | 1.1 | Fluorinated polymer A | 1.1 | Nil | - |
| Ex. 3-7 | MEA3 | Electrolyte membrane B | 2 | Fluorinated polymer C | 1.2 | Fluorinated polymer A | 1.1 | Nil | - |
| Ex. 3-8 | MEA1 | Electrolyte membrane A | 1.1 | Fluorinated polymer A | 1.1 | Fluorinated polymer A | 1.1 | Nil | - |

The degree of swelling measured by using the recovered fluorinated polymer in Ex. 3-1 was lower than the degree of swelling measured by using the recovered fluorinated polymer in Ex. 3-5.

The degree of swelling measured by using the recovered fluorinated polymer in Ex. 3-2 was lower than the degree of swelling measured by using the recovered fluorinated polymer in Ex. 3-6.

The degree of swelling measured by using the recovered fluorinated polymer in Ex. 3-3 was lower than the degree of swelling measured by using the recovered fluorinated polymer in Ex. 3-7.

The degree of swelling measured by using the recovered fluorinated polymer in Ex. 3-4 was lower than the degree of swelling measured by using the recovered fluorinated polymer in Ex. 3-8.

The entire disclosure of Japanese Patent Application No. 2023-221438 filed on December 27, 2023 including specification, claims, drawings and summary is incorporated herein by reference in its entirety.

### REFERENCE SYMBOLS

10: membrane electrode assembly
11A,11C: catalyst layer
12A,12C: gas diffusion layer
13: anode
14: cathode
15: polymer electrolyte membrane

## Claims

1. A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, the method comprising:
bringing the membrane electrode assembly into contact with a first solution selected from solution A consisting solely of water and solution B containing water and an alcohol in an alcohol content of 10 parts by mass or less relative to 100 parts by mass of the water;
mixing the membrane electrode assembly that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances including the catalyst; and
removing the insoluble substances contained in the mixed solution and recovering the fluorinated polymer contained in the mixed solution from which the insoluble substances have been removed.

2. The method for recovering the fluorinated polymer according to Claim 1, wherein the contact between the first solution and the membrane electrode assembly is contact between the solution A and the membrane electrode assembly, and the solution A is heated.

3. The method for recovering the fluorinated polymer according to Claim 1 or 2, wherein when the membrane electrode assembly is brought into contact with the first solution, the first solution is heated, and
the temperature of the first solution is lower than the temperature of the second solution.

4. The method for recovering the fluorinated polymer according to Claim 1 or 2, wherein the recovered fluorinated polymer has a weight average molecular weight of 10,000 to 1,000,000.

5. The method for recovering the fluorinated polymer according to Claim 3, wherein the difference between the temperature of the first solution and the temperature of the second solution is 5°C or more and 115°C or less.

6. A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, wherein the fluorinated polymer is the fluorinated polymer that is contained in the electrolyte membrane, the method comprising:
separating the electrolyte membrane from the membrane electrode assembly,
bringing the separated electrolyte membrane into contact with a first solution selected from solution A consisting solely of water and solution B containing water and an alcohol in an alcohol content of 10 parts by mass or less relative to 100 parts by mass of the water;
mixing the electrolyte membrane that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances; and
removing the insoluble substances contained in the mixed solution and recovering the fluorinated polymer contained in the mixed solution from which the insoluble substances have been removed.

7. The method for recovering the fluorinated polymer according to Claim 6, wherein the contact between the first solution and the electrolyte membrane is contact between the solution A and the electrolyte membrane, and the solution A is heated.

8. The method for recovering the fluorinated polymer according to Claim 6 or 7, wherein when the electrolyte membrane is brought into contact with the first solution, the first solution is heated, and
the temperature of the first solution is lower than the temperature of the second solution.

9. The method for recovering the fluorinated polymer according to Claim 6 or 7, wherein the recovered fluorinated polymer has a weight average molecular weight of 10,000 to 1,000,000.

10. The method for recovering the fluorinated polymer according to Claim 8, wherein the difference between the temperature of the first solution and the temperature of the second solution is 5°C or more and 115°C or less.

11. A method for recovering a fluorinated polymer from a membrane electrode assembly comprising an anode having a catalyst layer containing a catalyst and a fluorinated polymer having a sulfonic acid group, a cathode having a catalyst layer containing a catalyst and a fluorinated polymer having a sulfonic acid group, and an electrolyte membrane containing a fluorinated polymer having a sulfonic acid group, disposed between the anode and the cathode, wherein the fluorinated polymer is at least one of the fluorinated polymer contained in the catalyst layer of the anode and the fluorinated polymer contained in the catalyst layer of the cathode, the method comprising:
separating at least one of the anode and the cathode from the membrane electrode assembly,
bringing the at least one of the separated anode and cathode into contact with a first solution selected from solution A consisting solely of water and solution B containing water and an alcohol in an alcohol content of 10 parts by mass or less relative to 100 parts by mass of the water;
mixing the at least one of the anode and cathode that has been brought into contact with the first solution, with a second solution containing water and an alcohol in an alcohol content of 30 parts by mass or more relative to 100 parts by mass of the water, to obtain a mixed solution containing the fluorinated polymer, the second solution, and insoluble substances; and
removing the insoluble substances contained in the mixed solution and recovering the fluorinated polymer contained in the mixed solution from which the insoluble substances have been removed.

12. The method for recovering the fluorinated polymer according to Claim 11, wherein the contact between the first solution and the at least one of the anode and cathode is contact between the solution A and the at least one of the anode and cathode, and the solution A is heated.

13. The method for recovering the fluorinated polymer according to Claim 11 or 12, wherein when the at least one of the anode and cathode is brought into contact with the first solution, the first solution is heated, and
the temperature of the first solution is lower than the temperature of the second solution.

14. The method for recovering the fluorinated polymer according to Claim 11 or 12, wherein the recovered fluorinated polymer has a weight average molecular weight of 10,000 to 1,000,000.

15. The method for recovering the fluorinated polymer according to Claim 13, wherein the difference between the temperature of the first solution and the temperature of the second solution is 5°C or more and 115°C or less.
